# EUROPEAN PATENT APPLICATION

(11) **EP 3 689 501 A1**
(43) Date of publication of application: **05.08.2020**
(21) Application number: 19154817.1
(22) Date of filing: 31.01.2019
(51) Int. Cl.: B22F 3/105, B33Y 80/00, B33Y 50/00, B29C 64/153, F16C 11/12

(54) **METHOD FOR MANUFACTURING A DEVICE BY IMPLEMENTATION OF AN ADDITIVE MANUFACTURING PROCESS REQUIRING NO SACRIFICAL SUPPORT STRUCTURE**

(71) Applicant: CSEM Centre Suisse d'Electronique et de Microtechnique SA, 2002 Neuchâtel (CH)
(72) Inventor: COSANDIER, Florent, 2013 Colombier (CH); KIENER, Lionel, 1405 Pomy (CH); KRUIS, Johan, 1066 Epalinges (CH); SAUDAN, Hervé, 1720 Corminboeuf (CH)
(74) Representative: e-Patent SA

(57) **Abstract**

Method for manufacturing a device (1) comprising a compliant mechanism, by an additive manufacturing process, comprising the steps consisting in:
a) providing a projected design of a component to be manufactured conceived to fulfil a predefined mechanical function involving the elastic deformation of at least one flexible element;
b) applying a set of overhang rules on the projected design in order to identify any part of the projected design which exhibits a shape such that the manufacture of the component would require the manufacture of a support structure;
c) providing data relating to the corresponding support structure,
d) generating an amended design by combining the projected design of the component with the support structure data, in such a way that the amended design integrates a non-sacrificial support structure (8) as a part of at least one flexible element (6), while fulfilling the predefined mechanical function, and
e) implementing the additive manufacturing process on the basis of the amended design.

## Description

### Technical Field

The invention concerns a method for manufacturing a device comprising a compliant mechanism, by implementation of an additive manufacturing process, comprising the steps consisting in:
a) providing a projected design of a geometrical component to be manufactured, the projected design being conceived to fulfil a predefined mechanical function involving the elastic deformation of at least one flexible element;
b) applying a set of overhang rules on the projected design in order to identify any part of the projected design which exhibits a shape such that the manufacture of the geometrical component by implementation of the additive manufacturing process would require the manufacture of a support structure;
c) providing data relating to the corresponding support structure.

A compliant mechanism is a flexible device, capable of transferring force or displacement through the elastic deformation of its mechanical structure. Very often, the flexible elements of compliant mechanisms are designed with a blade geometry, which can be generally defined as a parallelepiped with a length usually much bigger than its width and its width usually much bigger than its thickness. This definition is not limitative. Flexure blades can also be conceived with variable thickness, with notch or conical profile or any other type of profiles.

### State of the art

Many techniques for manufacturing devices through additive manufacturing (AM) processes are already known in the state of the art.

In particular, the manufacture of compliant mechanisms through additive manufacturing processes like Selective Laser Melting (SLM) or Selective Laser Sintering (SLS) or Electron Beam Melting (EBM) or Direct Energy Deposition (DED) or Binder Jetting (BJ) or Fused Deposition Melting (FDM) or Photopolymerization (Stereo Lithography SLA or Digital Light Processing DLP) is well documented, in particular where a support structure is required. Indeed, in this kind of manufacturing process, imprinted flexible parts either have to touch the base, or building plate, or require some support structure to guarantee their manufacturability.

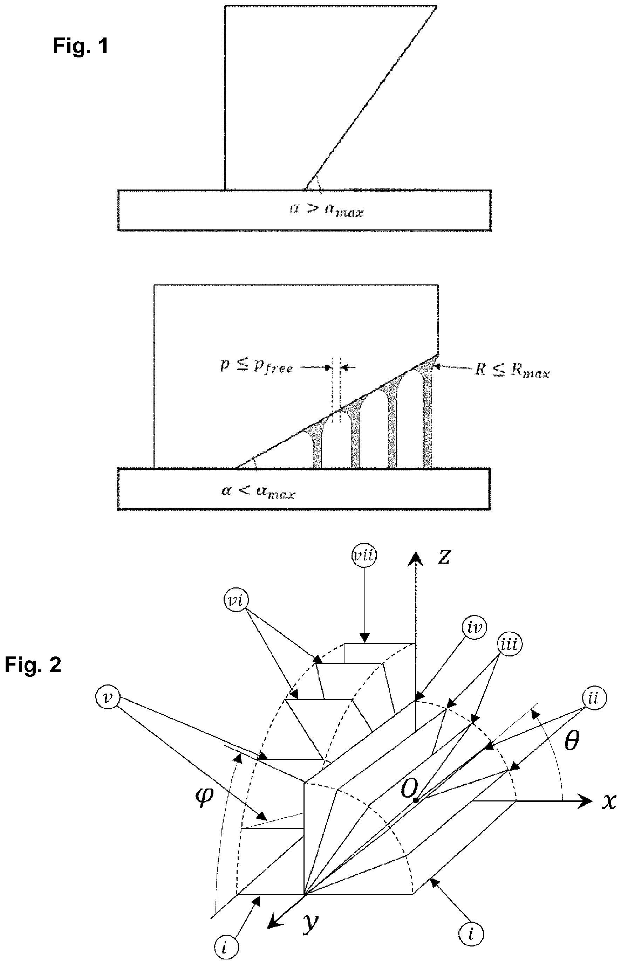

Some empirical rules have to be followed when designing the support structure, which can be gathered in a set of overhang rules. A simple non-exhaustive example of such overhang rules is schematically illustrated in Figure 1:
1) A structure tilted by less than a critical angle (*αₘₐₓ*) with respect to the horizontal direction does require support,
2) A radius bigger than a critical value (*Rₘₐₓ*) does require support, and
3) A free standing structure extending on an overhang plane along a horizontally projected length p longer than a critical value (*p_{free}*) does require support.

For SLM, typical critical values of *αₘₐₓ* can vary from 19° to 45° approximately, *Rₘₐₓ* is approximately 3 mm, *p_{free}* is approximately 0.5 mm.

In the fabrication of a flexure blade through an additive manufacturing process, it is important to consider the orientation of the blade during the fabrication in regard to the overhang limitations.

Figure 2 schematically illustrates different families of blades classified according to their spatial orientation. In the figure, the Z axis represents the building direction of the additive manufacturing process. One can distinguish seven types of blades:
i) A horizontal blade,
ii) A horizontal blade tilted by an angle *θ* < *αₘₐₓ* around its length side (y-axis),
iii) A horizontal blade tilted by an angle *θ* ≥ *αₘₐₓ* around its length side (y-axis),
iv) A sagittal blade (i.e. a blade with its length side being horizontal and its width side being vertical),
v) A horizontal blade tilted by an angle *ϕ* < *αₘₐₓ* around its width side (x-axis),
vi) A horizontal blade tilted by an angle *ϕ* ≥ *αₘₐₓ* around its width side (x-axis), and
vii) A vertical blade.

Some kinds of blades with particular orientations can be printed without support and some cannot. Based on the previously stated overhang rules, blades of types iii), iv), vi) and vii) don't need support while blades of types i) ii) and v) do need a support structure.

The need for support might be a substantial disadvantage compared to cases where no support structure is required. Indeed, the support removal process is time consuming, risky for slender parts like the flexible blades and limit the design freedom by requiring external access for the support structure removal. In addition, the overall cost of the manufactured device is therefore raised accordingly with the additional material and the post-processing time used for the support structure removal.

In the recent years, many solutions have been developed to ease the process of removal of the support structure, either through specific designs of the support structure itself, or through specific designs of the attachment surfaces between the manufactured device and its support structure.

For instance, patent applications WO 2012/131481 A1, EP 2910362 A1 and WO 2018041395 A1 provide different solutions for easing the removal of a support structure after the completion of an additive manufacturing process.

Further, it also appears from the state of the art that these support structures fulfil a function of a heat sink during the additive manufacturing process which is typically a process implying high temperatures.

However, a need still exists for additive manufacturing methods providing a simplification of the post-processing steps, in particular the removal of the support structure. Such improved additive manufacturing methods should preferably allow the manufacture of devices with complex shapes which cannot otherwise be manufactured.

### Disclosure of the invention

An aim of the invention is to propose a method for manufacturing a device comprising a compliant mechanism which overcomes the above-mentioned disadvantages of the prior art and which is hence suitable for a wide range of shapes and applications, also in the field of large scale manufacturing.

More specifically, the invention relates to a method for manufacturing a mechanical and/or electrical and/or thermal device according to the above mentioned features and comprising further steps consisting in:
d) generating an amended design by combining the projected design of the geometrical component with the support structure data, in such a way that the amended design integrates a non-sacrificial support structure as a part of at least one flexible element, while fulfilling the predefined mechanical function of the device to be manufactured involving the elastic deformation of the flexible element, and
e) implementing the additive manufacturing process on the basis of the amended design to manufacture the device.

Thanks to these features, the support structure is at least partly incorporated into the device structure itself to simplify the post-processing operation by drastically limiting the need to remove the prior art sacrificial support structure, offering significant advantage over the state of the art.

According to a preferred embodiment, the amended design fulfils the set of overhang rules, thus allowing incorporation of the whole support structure in the finally manufactured device, leading to a complete absence of the post-processing operation relating to the removal of a sacrificial support structure.

Advantageously, at least part of the non-sacrificial support structure may be arranged to connect the flexible element to a building plate during the additive manufacturing process.

Alternatively or as a complement, at least part of the non-sacrificial support structure may be arranged to connect at least one flexible element to another part of the device.

Alternatively or as a complement, at least part of the non-sacrificial support structure may be arranged to connect several, preferably parallel, flexible elements between each other so as to contribute to the elastic properties of the compliant mechanism.

More advantageously, the projected design of the geometrical component comprises several thin geometrical parts requiring the manufacture of a sacrificial support structure according to the set of overhang rules, the thin geometrical parts being arranged in one of the following geometries, or in a combination thereof: a latticework geometry, an interlocking geometry, a piling geometry or a bypassing geometry.

Latticework consists in creating openings to virtually decrease the natural stiffness of a blade and is well suited for sagittal blades.

Interlocking is used when two structures cross each other while being interpenetrated. An opening in a support structure also allows interlocking of intersecting sagittal blades.

Piling consists in supporting a horizontal blade with a tree-like structure that minimizes the impact on the bending stiffness.

Bypassing is used when several flexure elements are one above the other and are not connected to each other, which is typically supported by latticework or piling.

Combination is meant for any combination of latticework, interlocking, piling and bypassing.

Generally, it might be preferable to provide that the non-sacrificial support structure contributes to the predefined required mechanical and/or electrical and/or thermal features of the manufactured device.

Still on a general basis, the additive manufacturing process might be taken from the group comprising Selective Laser Melting, Selective Laser Sintering, Fused Deposition Melting, Electron Beam Melting, Direct Energy Deposition, Binder Jetting and Photopolymerization.

Typically, the device comprises a compliant mechanism which is manufactured on a building plate by implementation of the additive manufacturing process. Thanks to a suitable amended design, the compliant mechanism might preferably be removed from the building plate by a cutting operation that takes place within one to three distinct planes, more preferably within one single plane or more generally any continuous free form surface. Thus, the manufacturing process can be even more simplified in comparison to known processes.

The present invention also concerns a device comprising a compliant mechanism obtainable by the implementation of a method according to the above disclosed features, this device preferably having a monolithic structure.

According to a preferred embodiment, the device might comprise at least two interlocked latticework blades each of which has a first end connected to a first mass and a second end connected to a second mass, such that the first and second masses are able to pivot with respect to each other around a virtual rotation axis which is typically located at the intersection of the flexure blades.

According to a more specific embodiment, the first and second masses might be first and second hemi-cylindrical masses facing each other, while defining a first gap between them, and each of which bears a cylindrical sleeve along part of its length, the cylindrical sleeves being arranged with respect to each other so as to define a second gap between them such that the first and second masses are able to rotate with no friction between them.

According to an alternate preferred embodiment, the device might comprise
a first axially symmetrical elastic member connecting a first mass to a second mass such that the first and second masses are able to rotate with respect to each other around a first virtual rotation axis located on the axis of symmetry of the first elastic member,
a second axially symmetrical elastic member connecting the second mass to a third mass such that the second and third masses are able to rotate with respect to each other around a second virtual rotation axis located on the axis of symmetry of the second elastic member,
the first and second elastic members being interlocked latticework members such that the first and second rotation axis are perpendicular to each other, so as to define a gimbals type link between the first and third masses.

According to a further alternate preferred embodiment, the device might comprise three interlocked latticework blades each of which has a first end connected to a first mass and a second end connected to a second mass and being arranged so as to define a rotation axis perpendicular to the two other rotation axis defined by the two other blades, such that the first and second masses are able to pivot with respect to each other around three perpendicular virtual rotation axis.

Further, the invention also concerns a device according to the above mentioned features and further fulfilling an electrical and/or thermal function.

### Brief description of the drawings

Further details of the invention will appear more clearly upon reading the description below, in connection with the following figures which illustrate:
- Figs. 1 and 2: schematic illustrations explaining which rules need to be fulfilled during additive manufacturing processes;
- Figs. 3a-3c: schematic views of a first examplary compliant device during and after implementation of an additive manufacturing process according to the invention;
- Figs. 4a-4h: schematic views illustrating logical steps for conceiving a design of a second examplary compliant device, prior to the implementation of an additive manufacturing process, according to the invention;
- Fig. 5: a schematic perspective view of a third examplary compliant device according to the invention and partly based on the design of Fig. 4f;
- Fig. 6: a schematic perspective view of a fourth examplary compliant device according to the invention;
- Figs. 7a-7b: schematic perspective views of a fifth examplary compliant device according to the invention;
- Fig. 8: simplified partial perspective views of different alternate embodiments of a compliant device partly based on the design building process as shown on Figs. 4a-4h;
- Figs. 9a-9b: schematic perspective views of a sixth examplary compliant device according to the invention;
- Figs. 10a-10b: schematic perspective views of a seventh examplary compliant device according to the invention;
- Figs. 11a-11b: schematic perspective views of an eighth examplary compliant device according to the invention;
- Figs. 12a-12d: schematic perspective views of further examplary embodiments of compliant devices according to the invention;
- Figs. 13a and 13b: schematic views illustrating logical steps for conceiving a design of a further examplary compliant device, prior to the implementation of an additive manufacturing process, according to the invention, and
- Fig. 14: a schematic perspective view of a further examplary compliant device according to the invention and based on the design of Fig. 13b.

### Embodiments of the invention

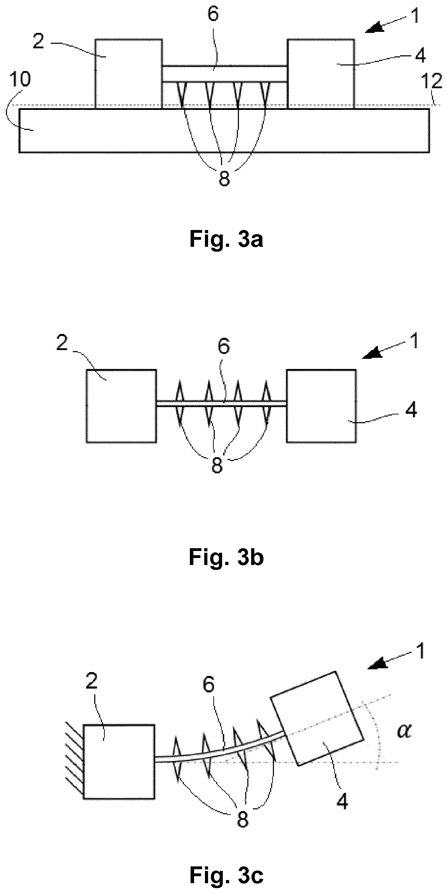

Figures 3a-3c are schematic side views of a first examplary compliant device illustrating the general principle of the invention.

As previously stated, the present invention relates to the manufacture of mechanical and/or electrical and/or thermal devices through an additive manufacturing process and is to incorporate at least partly the corresponding support structure into the device structure itself and to avoid the post-processing operation required to remove the sacrificial support structure, offering significant advantage over the state of the art.

Schematically, the design methodology is illustrated in Figures 3a-3c. A compliant mechanism 1 is composed of several rigid bodies 2 and 4 which are linked to each other by a compliant structure 6. A non-sacrificial support structure 8 is printed to support the compliant structure 6 during the additive manufacturing process, the latter being preferably taken from the group comprising Selective Laser Melting, Selective Laser Sintering, Fused Deposition Melting, Electron Beam Melting, Direct Energy Deposition, Binder Jetting and Photopolymerization. The whole compliant mechanism is printed on a building plate 10.

Figure 3a is a side view of the compliant mechanism 1 while it is still borne by the building plate 10. Figures 3b and 3c are similar top views of the compliant mechanism 1 after it has been removed from the building plate 10, respectively in a rest position and in a bent position.

Indeed, after the 3D printing process, or additive manufacturing process, the compliant mechanism 1 is detached from the building plate 10 along a cut plane 12, for example by saw cutting. This cut represents virtually the only mandatory post-processing operation as the compliant mechanism 1 is then operational. As shown on Figure 3c, one of the rigid body 2 might be fixed as a base and the other rigid body 4 might move according to the compliant mechanism's degrees of freedom. In this examplary case, it can move in rotation around the angle alpha.

It is noticeable that the compliant mechanism 1 illustrated here is very basic and shown schematically as a generic compliant mechanism for the purpose of disclosing the general principle of the invention.

To sum up the features of the invention, it might be described as a non-sacrificial support structure for an additive manufacturing process that:
- might preferably be incorporated into the mechanical and/or electrical and/or thermal function of the corresponding device;
- is integrated into the calculation of the mechanical and/or electrical and/or thermal function of the corresponding device, by finite element analysis for example;
- is separated from the building plate by a reduced number of cuts, preferably planar cuts;
- remains connected to the other parts of the corresponding device after cutting;
- preferably does not enter into contact with other parts of the corresponding device when the latter is a compliant mechanism and undergoes a deformation of an amplitude within the deformation range of its conceived function.

Though the present disclosure is essentially based on the manufacture of mechanical devices as far as the examplary embodiments are concerned, more particularly of compliant devices, the method of the invention allows the manufacture of many types of devices, like previously stated, such as mechanical devices and/or electrical devices and/or thermal devices.

The implementation of the process according to the invention, providing a designing step of a non-sacrificial support, results in many advantages such as:
- reduction of post-processing time and cost as the support structure remains linked to the manufactured device;
- possibility to produce compliant mechanisms with most of the advantages of additive manufacturing (complex geometries that are impossible to create by other means, no assembly...);
- possibility to produce blades with any orientation within a monolithic structure by additive manufacturing;
- possibility to free a mobile part of the manufactured device within the same operation than the cutting operation to separate the manufactured device from the building plate;
- possibility to carry out this cutting operation, substantially within a plane parallel to the build plate, by simple operation such as a sawing, WEDM or by local drilling or milling;
- more safety, referring to prior art processes, thanks to the fact that it is preferably not required to remove any sacrificial support structure close to thin flexible structures of the manufactured device;
- final machining to remove the manufactured device from the building plate does not need to be done directly in contact with thin areas (final functional parts) of the manufactured device but can be shifted to small appendices, which decreases the risk of damages to the main functional parts.

The aforementioned designing principle involves different design strategies applicable to the manufacture of blades or flexural element orientations. These strategies include latticework, interlocking, piling, bypassing and combining (of these strategies).

It should be noticed here that the implementation of latticework provides the following further advantages:
- possibility to carry out an interlocking of crossed blades for monolithic compliant mechanisms on two intersecting planar surfaces;
- centre shift of interlocked crossed blades pivot is enhanced compared to non-interlocked crossed blades pivot, and
- the natural stiffness of such latticework blades is equivalent to the natural stiffness of a narrower full blade but its transverse stiffness is increased compared to such a narrower full blade.

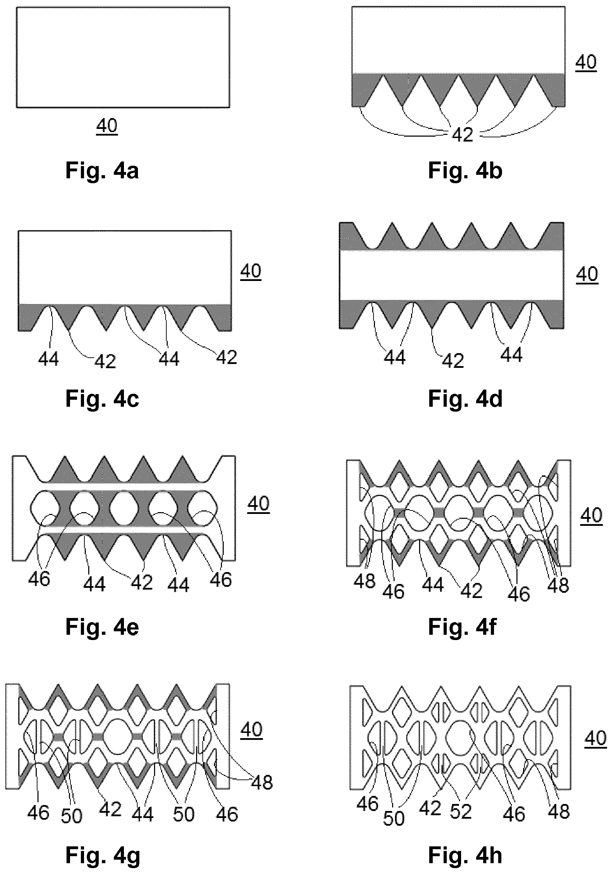

Figures 4a to 4h are schematic views illustrating logical steps for conceiving a design of a sagittal blade according to the invention, prior to the implementation of an additive manufacturing process.

According to the invention, it is preferable to limit as much as possible, or even avoid, the use of a sacrificial support structure. Instead, a non-sacrificial support structure is designed as illustrated by the embodiment of figures 4a to 4h in which only non-sacrificial support structure is being used. The non-sacrificial support structure portions have been shaded in figures 4b to 4g for illustration purpose.

Starting from a blank sagittal blade 40 on figure 4a, triangles are cut out in order to reduce the support structure attachment area 42, as illustrated on figure 4b. Radii 44 might then be added for stiffness and stress reasons, as shown in figure 4c. The same operations are preferably carried out on the opposite side of the sagittal blade 40 for keeping it symmetrical, as illustrated on figure 4d.

Further, large openings 46 are cut out in the sagittal blade 40 in order to make the crossing of two blades possible, as shown in figure 4e, while secondary openings 48 can be made, in order to keep the section of the blade 40 more or less constant and avoid a polygonal effect, as illustrated in figure 4f.

Advantageously, main stiffeners 50 defining a vertical compressive structure can be added, at least in some of the large openings 46, in order to increase the longitudinal stiffness, without increasing the stiffness in flexion, as illustrated in figure 4g. Secondary stiffeners 52 might be added in the secondary openings 48 in order to further increase the longitudinal stiffness of the blade 40, as shown in figure 4h.

A sagittal blade 40 exhibiting the design as illustrated in figure 4h can then be manufactured through one of the previously mentioned additive manufacturing method without any need to provide a sacrificial support structure, hence simplifying the whole manufacturing process with respect to prior art processes.

Such a blade can be used as a compliant mechanism, while having a first end connected to a support and the other end connected to a part intended to move in flexion around the support.

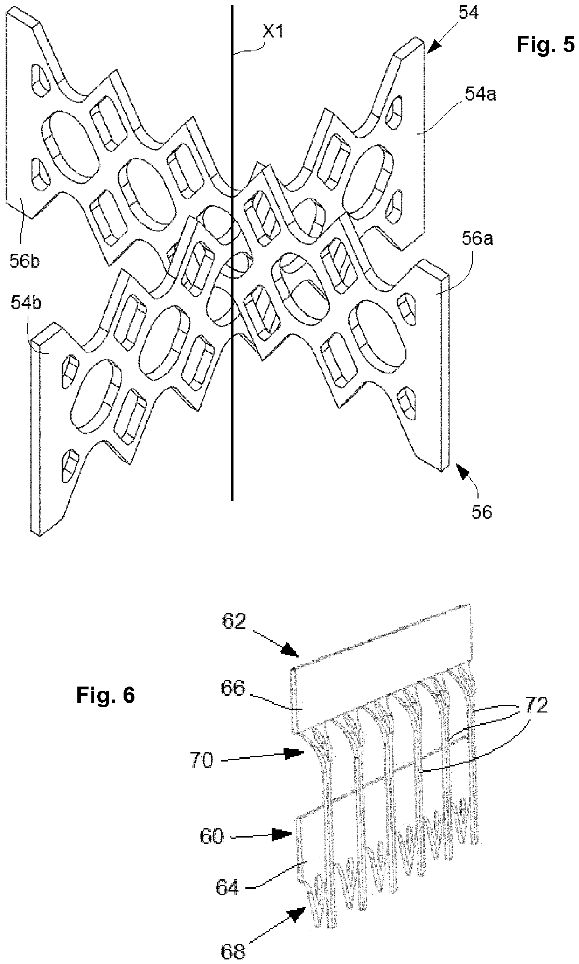

Further, two latticework blades of this type can be manufactured in an interlocking fashion as illustrated in figure 5.

Indeed, the two blades 54 and 56 result from the above described design strategy (in figure 4f here) and are interlocked in such a way that each of them can exhibit a flexion around a rotation axis X1 up to an angle of approximately +/- 20 degrees without entering in contact with the other blade.

Such a construction enhances the axial centre shift performance of the pivot as well as the out-of-plane stiffness, while the post-processing is greatly simplified with respect to prior art processes.

Each of the blades 54, 56 may have one of its ends 54a, 56a connected to a first mass (non-illustrated), for instance a still support, while the two free ends 54b, 56b are connected to a second mass such that the first and second masses are able to pivot with respect to each other around the rotation axis X1.

Figure 6 illustrates a further examplary embodiment of the invention consisting in implementing a bypassing arrangement or design for manufacturing two sagittal blades 60 and 62.

Each blade 60, 62 comprises here a non-latticework main part 64, 66 which bears a non-sacrificial support structure 68, 70 having a reduced area for ensuring connection to a building plate during the additive manufacturing operation. The non-sacrificial support structures 68 and 70 are latticework structures to limit their respective weights, while the support structure 70 of the higher blade 62 has long legs 72 allowing the bypassing arrangement of the higher blade 62 with respect to the lower blade 60. Thanks to this arrangement, it is possible to manufacture two coplanar parallel sagittal blades at the same time.

As previously mentioned, starting from required mechanical properties for the final sagittal blades, leading to a projected design, the set of overhang rules is applied. It thus appears that a support structure is required for implementation of the additive manufacturing operation. The projected design and the hypothetical sacrificial support structure data are combined with each other, in a computation operation, in order to define an amended design for the sagittal blades to be manufactured, as illustrated in figure 6, according to which no sacrificial support structure is required as far as the mechanical properties of the support structures 68, 70 are taken into account in the properties of the whole corresponding blade 60, 62. Typically, the dimensions of each of the main parts 64, 66 is reduced with respect to the initial dimensions of the corresponding whole blade as defined in the initial projected design, so as to balance the presence of the non-sacrificial support structure. Hence, the final blades, including their non-sacrificial support structures, exhibit the required mechanical properties associated to the initial projected design based on the use of sacrificial support structure.

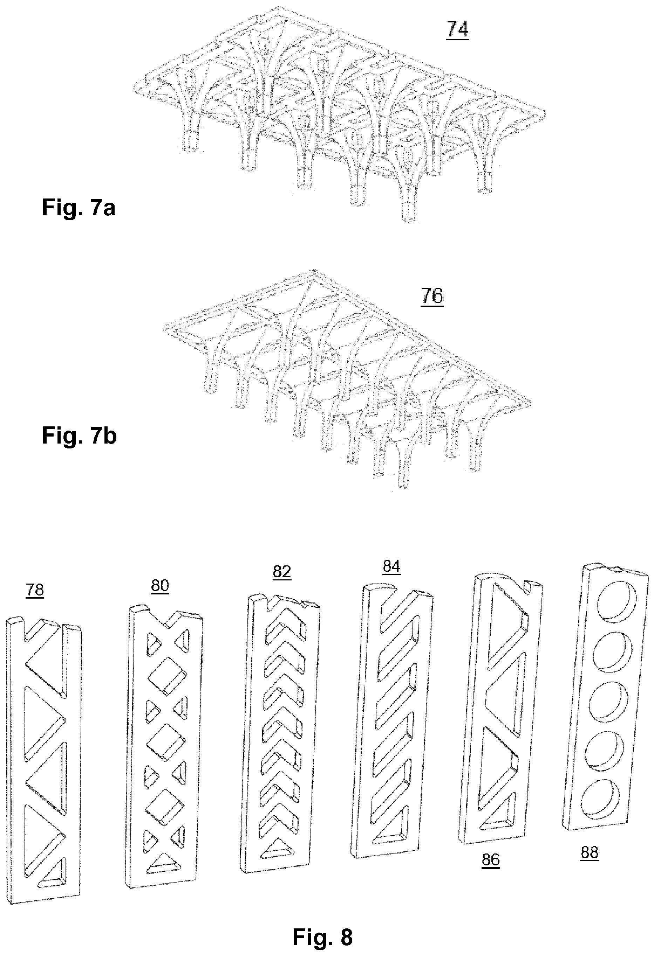

Figures 7a and 7b illustrate two examplary embodiments of devices based on piling designs.

In figure 7a, horizontal blade 74 can be divided in units each of which is supported by four pillars fulfilling the set of overhang rules and joining together to define a small area in contact with the building plate during the additive manufacturing process. The mechanical properties of the pillars are integrated within the whole device mechanical properties such that these pillars are non-sacrificial.

In figure 7b is shown a similar alternate embodiment of a horizontal blade 76 divided in small units each of which is supported by a single pillar fulfilling the set of overhang rules.

Figure 8 illustrates simplified partial perspective views of different alternate embodiments of a compliant device partly based on the design building process as described in connection with figures 4a to 4h.

Vertical blades 78, 80, 82, 84, 86 and 88 illustrate a variety of possible openings or lattice shapes that can be implemented as described above and all of which fulfil the requirements as stated by the set of overhang rules.

It is noticeable that the design of blade 88 is limited by the dimensions of its holes which might not be bigger than 6 mm in diameter, otherwise the overhang would be too great.

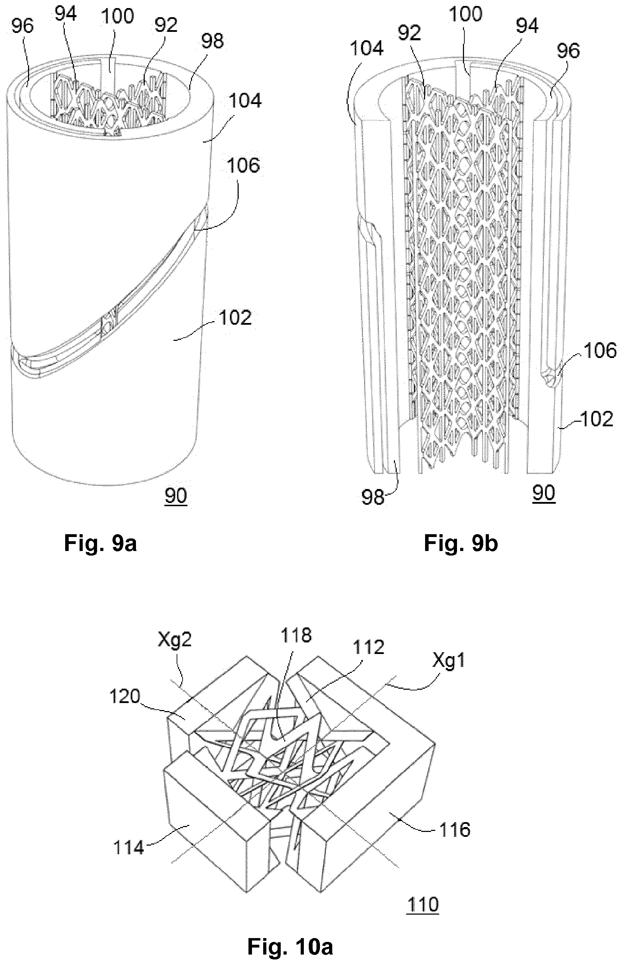

Figures 9a and 9b illustrate a further examplary embodiment of a mechanical device 90, here a compliant mechanism, based on the principle of interlocking latticework blades as previously described in connection with the embodiment of figure 5.

Indeed, the mechanical device 90 comprises two interlocked latticework blades 92 and 94 each of which has a first end connected to a first mass 96 and a second end connected to a second mass 98, such that these first and second masses are able to pivot with respect to each other around a rotation axis located at the intersection of the blades 92, 94.

According to the more specific embodiment of figures 9a and 9b, the first and second masses 96, 98 are first and second hemi-cylindrical masses facing each other, while defining a first gap 100 between them, and each of which bears a cylindrical sleeve 102, 104 along part of its length, the cylindrical sleeves 102, 104 being arranged with respect to each other so as to define a second gap 106 between them such that the first and second masses 96, 98 are able to rotate with no friction between them. The second gap 106 is located between two planes which are tilted with respect to the axis of the relative rotation between the first and second masses 96, 98.

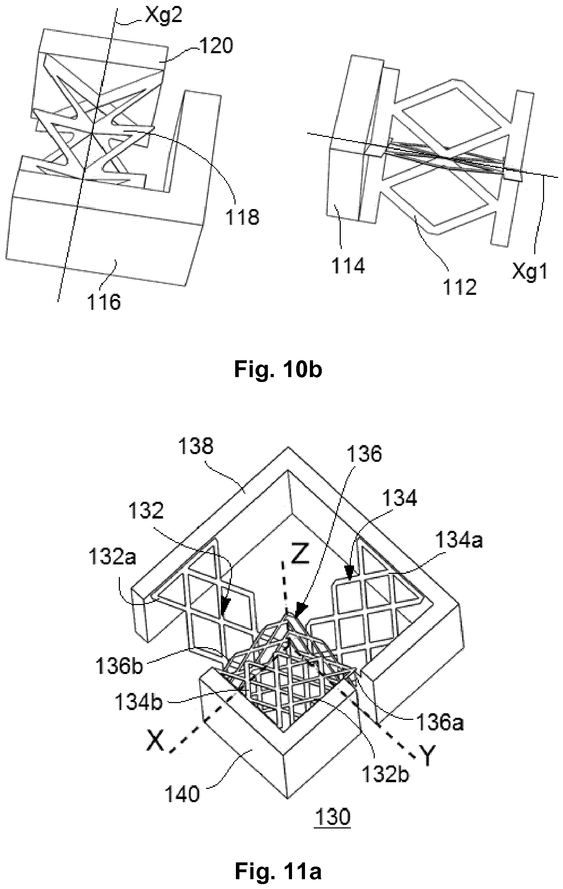

Figures 10a and 10b illustrate a further examplary embodiment of a compliant mechanism 110 based on the principle of interlocking latticework blades as previously described in connection with the embodiment of figure 5.

The compliant mechanism comprises here a first axially symmetrical elastic member 112 connecting a first mass 114 to a second mass 116 such that the first and second masses 114 and 116 are able to rotate with respect to each other around a first rotation axis Xg1 located on the axis of symmetry of the first elastic member 112.

The mechanical device 110 further comprises a second axially symmetrical elastic member 118 connecting the second mass 116 to a third mass 120 such that the second and third masses 116, 120 are able to rotate with respect to each other around a second rotation axis Xg2 located on the axis of symmetry of the second elastic member 118.

The first and second elastic members 112, 118 are interlocked latticework members such that the first and second rotation axis Xg1 and Xg2 are perpendicular to each other so as to define a gimbals type link between the first and third masses 114, 120, thanks to the monolithic mechanical device 110.

The elastic members 112 and 118 are illustrated separately in figure 10b so that their structure can be better appreciated.

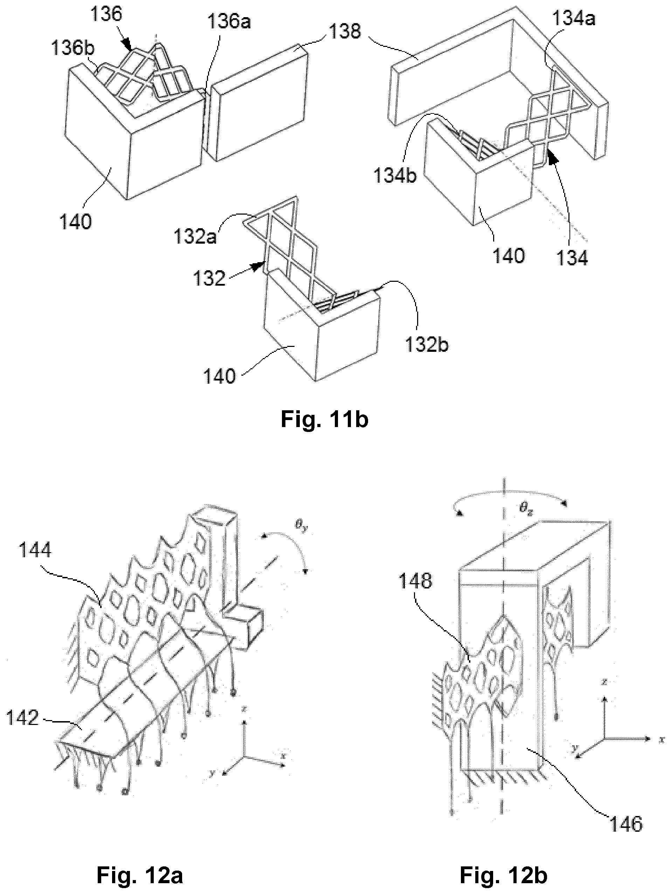

Figures 11a and 11b illustrate a further examplary embodiment of a compliant mechanism 130 based on the principle of interlocking latticework blades as previously described in connection with the embodiment of figure 5.

According to this further alternate preferred embodiment, the mechanical device 130 is a compliant device comprising three interlocked latticework blades 132, 134, 136 each of which has a first end 132a, 134a, 136a connected to a first mass 138 and a second end 132b, 134b, 136b connected to a second mass 140.

Each blade is arranged so as to define a rotation axis perpendicular to the two other rotation axis defined by the two other blades, such that the first and second masses 138, 140 are able to pivot with respect to each other around three perpendicular rotation axis X, Y and Z.

Again, the blades 132, 134, 136 are illustrated separately in figure 11b so that their structures can be better appreciated.

Figures 12a to 12d illustrate simplified perspective views of further examplary embodiments of compliant devices according to the invention.

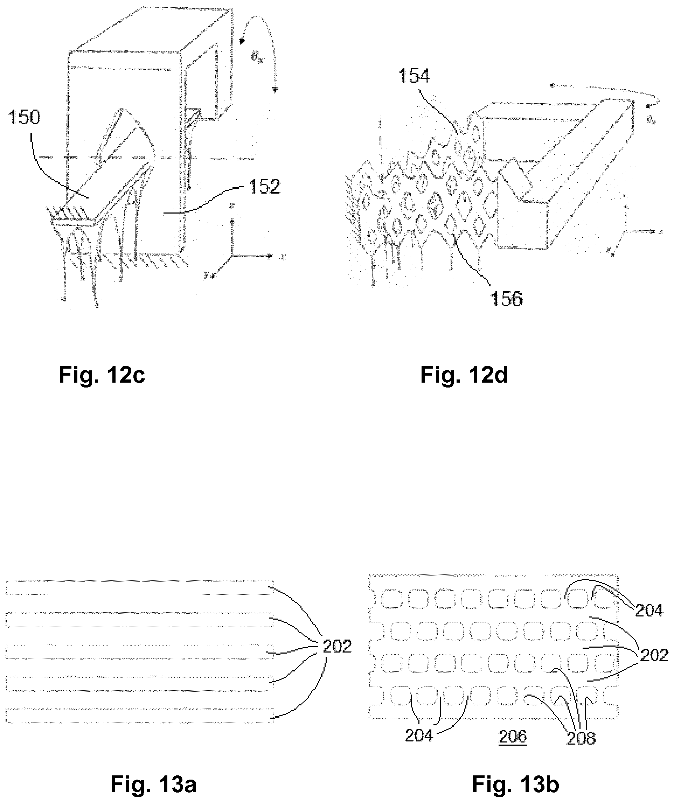

In these figures, different configurations are shown in which perpendicular blades define rotation pivots. The flexure blades in these examples are either crossing in their middle as illustrated in figure 12b and 12c, either crossing at position described by W. H. Wittrick (W. H. Wittrick, The Theory of Symmetrical Crossed Flexure Pivots, Department of Aeronautical Engineering, University of Sydney, Australia, 1948), minimizing their centre shifts (12d).

In all these illustrated cases, the whole device can be released by cutting only along one plane which is horizontal and at the lower position along the z-axis. It is noticeable that the support structure(s) for the mobile rigid portions of these devices are not represented and that the fixed rigid portions are not shown for clarity reason. The latter are only represented by a fixation cross-hatch marking.

These four examples illustrate different ways of combining the design strategies previously mentioned: latticework, interlocking, bypassing and piling, through the implementation of characteristic compliant mechanisms.

More precisely, what is shown is:
- on figure 12a: a torsion blade pivot comprising one horizontal blade 142 and one sagittal blade 144;
- on figure 12b: a crossed blade pivot comprising one vertical blade 146 and one sagittal blade 148;
- on figure 12c: a crossed blade pivot comprising one horizontal blade 150 and one vertical blade 152, and
- on figure 12d: a Wittrick pivot comprising two sagittal blades 154, 156.

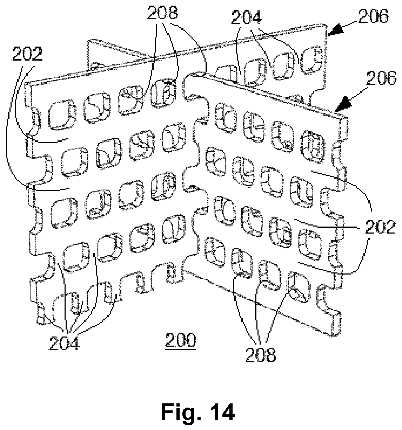

Figures 13a, 13b and 14 illustrate a further examplary embodiment of a compliant mechanism 200 (figure 14) based on the principle of interlocking latticework blades as previously described in connection with the embodiments of figures 4a-4h and 5.

Figure 13a illustrates a design of a geometrical shape to be manufactured, for each of a first and a second monolithic flexible elements, this design being conceived to fulfil a predefined mechanical function involving the elastic deformation of the corresponding monolithic flexible element. This design, comprising parallel thin blades 202, allows two corresponding flexible elements to be arranged so as to cross each other, by offsetting the blades 202 from a flexible element with respect to the blades 202 of the other flexible element.

However, the additive manufacturing process for these blades 202 requires the provision of a support structure (see the set of overhang rules as mentioned above).

According to the present invention, non-sacrificial pillars 204 can be designed and manufactured to connect the blades 202 to each other such that the complete assembly finally fulfils the set of overhang rules and that, at the same time, each corresponding monolithic flexible element 206 (figure 13b) comprises openings 208 allowing two such flexible elements 206 to be arranged across each other, as illustrated in figure 14.

It appears from a comparison of the compliant mechanisms illustrated in figure 5 and in figure 14 that the one skilled in the art might be able to conceive an unlimited number of embodiments allowing the manufacture of at least two flexible elements arranged across one another, thanks to the fact that at least one of them comprises an adequate opening.

As already stated above, the concept proposed here consists in the integration of a non-sacrificial support structure in the design of a mechanical and/or electrical and/or thermal device to be manufactured through application of the set of overhang rules instead of designing a sacrificial support structure like is usually done. Thus, the typical step of removal of the sacrificial support structure might preferably be avoided in the most advantageous embodiments of the invention in comparison to the prior art manufacturing processes.

In other words, the application of the set of overhang rules on the original projected design, corresponding to predefined required mechanical and/or electrical and/or thermal features, provides data relating to a sacrificial support structure which can be combined with the projected design to compute an amended design, in such a way that this amended design corresponds to a mechanical and/or electrical and/or thermal device to be manufactured including a non-sacrificial support structure and nevertheless exhibiting the predefined required mechanical and/or electrical and/or thermal features.

Preferably, different specific design strategies can also be carried out in the designing step leading from the original projected design based on predefined requirements to the amended design incorporating the non-sacrificial support structure, these strategies being either one of the following strategies, or a combination thereof: latticework, interlocking, piling, bypassing.

The implementation of the manufacturing method according to the invention provides a simplification of the post-processing steps, in particular the removal of the support structure. Many components with complex 3D design which were only available in limited quantities up to now, because of high production costs, might become available in large quantities thanks to the method of the invention and the fact that it will provide massive production cost reductions. Last but not least, the present improved additive manufacturing method allows the manufacture of devices with complex shapes which cannot otherwise be manufactured.

Although the invention has been described in terms of particular embodiments, various modifications are possible without departing from the scope of the invention as defined in the appended claims.

## Claims

1. Method for manufacturing a device comprising a compliant mechanism (1), by implementation of an additive manufacturing process, comprising the steps consisting in:
a) providing a projected design of a geometrical component to be manufactured, said projected design being conceived to fulfil a predefined mechanical function involving the elastic deformation of at least one flexible element (6);
b) applying a set of overhang rules on said projected design in order to identify any part of said projected design which exhibits a shape such that the manufacture of said geometrical component by implementation of said additive manufacturing process would require the manufacture of a support structure;
c) providing data relating to the corresponding support structure,
the method being **characterized in that** it comprises further steps consisting in:
d) generating an amended design by combining said projected design of said geometrical component with said support structure data, in such a way that said amended design integrates a non-sacrificial support structure (8) as a part of at least one flexible element (6), while fulfilling the predefined mechanical function of the device to be manufactured involving the elastic deformation of said flexible element, and
e) implementing said additive manufacturing process on the basis of said amended design to manufacture said device.

2. Method according to claim 1, wherein at least part of said non-sacrificial support structure (8) is arranged to connect said flexible element (6) to a building plate during (10) said additive manufacturing process.

3. Method according to claim 1 or 2, wherein at least part of said non-sacrificial support structure is arranged to connect at least one flexible element to another part of said device.

4. Method according to any of claims 1 to 3, wherein at least part of said non-sacrificial support structure is arranged to connect several, preferably parallel, flexible elements between each other so as to contribute to the elastic properties of said compliant mechanism.

5. Method according to any of the preceding claims, wherein said projected design of said geometrical component comprises several flexible elements arranged in one of the following geometries, or in a combination thereof: a latticework geometry, an interlocking geometry, a piling geometry or a bypassing geometry.

6. Method according to any of the preceding claims, wherein said additive manufacturing process is taken from the group comprising Selective Laser Melting, Selective Laser Sintering, Fused Deposition Melting, Electron Beam Melting, Direct Energy Deposition, Binder Jetting and Photopolymerization.

7. Method according to any of the preceding claims, said device comprising a compliant mechanism being manufactured on a building plate (10) by implementation of said additive manufacturing process, wherein said compliant mechanism is removed from said building plate (10) by a cutting operation that takes place within one to three distinct planes, preferably within one single plane.

8. Device comprising a compliant mechanism obtainable by the implementation of a method according to any of claims 1 to 7.

9. Device according to claim 8, wherein it has a monolithic structure.

10. Device (90) according to claim 8 or 9, wherein it comprises at least two interlocked latticework blades (92, 94) each of which has a first end connected to a first mass (96) and a second end connected to a second mass (98), such that said first and second masses (96, 98) are able to pivot with respect to each other.

11. Device (90) according to claim 10, wherein said first and second masses (96, 98) are first and second hemi-cylindrical masses facing each other, while defining a first gap (100) between them, and each of which bears a cylindrical sleeve (102, 104) along part of its length, the cylindrical sleeves (102, 104) being arranged with respect to each other so as to define a second gap (106) between them such that said first and second masses (96, 98) are able to rotate with no contact or friction between them.

12. Device (110) according to claim 8 or 9, wherein it comprises
a first axially symmetrical flexible member (112) connecting a first mass (114) to a second mass (116) such that said first and second masses (114, 116) are able to rotate with respect to each other around a first rotation axis (Xg1) located on the axis of symmetry of said first flexible member (112),
a second axially symmetrical flexible member (118) connecting said second mass (116) to a third mass (120) such that said second and third masses (116, 120) are able to rotate with respect to each other around a second rotation axis (Xg2) located on the axis of symmetry of said second flexible member (118),
said first and second flexible members (112, 118) being interlocked latticework members such that said first and second rotation axis (Xg1, Xg2) are perpendicular to each other so as to define a gimbals type link between said first and third masses (114, 120).

13. Device (130) according to claim 8 or 9, wherein it comprises three interlocked latticework blades (132, 134, 136) each of which has a first end (132a, 134a, 136a) connected to a first mass (138) and a second end (132b, 134b, 136b) connected to a second mass (140) and being arranged so as to define a rotation axis perpendicular to the two other rotation axis defined by the two other blades, such that said first and second masses (138, 140) are able to pivot with respect to each other around three perpendicular rotation axis (X, Y, Z).

14. Device according to any of claims 8 to 13, further fulfilling an electrical and/or thermal function.
